# EUROPÄISCHE PATENTSCHRIFT

(11) **EP 1 023 204 B1**
(45) Veröffentlichungstag und Bekanntmachung des Hinweises auf die Patenterteilung: **14.05.2003**
(21) Anmeldenummer: 98955358.1
(22) Anmeldetag: 30.09.1998
(51) Int. Cl.: B60R 13/10, G06K 19/07

(54) **FAHRZEUGKENNZEICHEN MIT BERÜHRUNGSLOS LESBAREM ELEKTRONISCHEN DATENTRÄGER UND HERSTELLUNGSVERFAHREN**
VEHICLE LICENCE PLATE WITH AN ELECTRONIC DATA CARRIER WHICH CAN BE READ WITHOUT CONTACT, AND METHOD FOR PRODUCING THE SAME
PLAQUE D'IMMATRICULATION DE VEHICULES A SUPPORTS DE DONNEES ELECTRONIQUES LISIBLES SANS CONTACT ET SON PROCEDE DE FABRICATION

(30) Priorität: 14.10.1997 DE 19745263; 21.10.1997 DE 19746389
(43) Veröffentlichungstag der Anmeldung: 02.08.2000
(73) Patentinhaber: SIEMENS AKTIENGESELLSCHAFT, 80333 München (DE)
(72) Erfinder: ROTHER, Bernhard, D-90768 Fürth (DE)
(86) Internationale Anmeldenummer: DE9802893
(87) Internationale Veröffentlichungsnummer: WO99019170

(56) Entgegenhaltungen:
- EP-A- 0 040 839
- EP-A- 0 648 653
- WO-A-96/36030
- WO-A-96/36031
- DE-A- 4 103 267

## Beschreibung

Fahrzeugkennzeichen insbesondere für Personenkraftwagen, motorisierte Zweiräder, Lastkraftwagen und Busse stellen seit jeher Objekte dar, welche unzulässigen Handlungen, wie Manipulationen und Fälschungen, ausgesetzt sind. Dabei unterliegt insbesondere die ordnungsgemäße Zuordnung von Fahrzeugkennzeichen, Fahrzeug und Besitzer eines Fahrzeuges unterschiedlichsten Formen der Manipulation. Eine mögliche Form einer solchen Manipulation liegt darin, daß ein Fahrzeug mit Kennzeichen versehen wird, welches an sich für eines anderes Fahrzeug insbesondere eines anderen Besitzers vorgesehen ist.

Zur Aufdeckung derartiger Manipulationen ist es bislang notwendig, daß auf manuelle Weise die auf dem Kennzeichen befindlichen Informationen verglichen werden mit dem Inhalt von zum Kennzeichen gehörigen offiziellen Begleitdokumenten, wie z.B. einem sogenannten Kraftfahrzeugbrief oder anderen, von einer Behörde ausgegebenen Dokumenten. Da diese Dokumente sich im Besitz von Personen befinden, sind derartige Vergleiche nur stichprobenartige auf dem Wege von sehr aufwendigen Personenkontrollen möglich.

Aus der WO 96/36031 ist ein gattungsgemäßes elektronisches Kennzeichensystem bekannt. Dieses enthält zum einen ein Fahrzeugkennzeichenteil, welches optisch lesbare Informationen und einen Datenträger für elektronisch verarbeitbare Informationen aufweist. Es enthält desweiteren ein Kennzeichenhalteteil, welches ein Elektronikmodul mit Signalprozessorelektronik, einer Radiofrequenzelektronik, und gegebenenfalls einer Stromversorgung aufweist. Nach Einlegung des Fahrzeugkennzeichenteiles in ein Kennzeichenhalteteil, welches an einem Fahrzeug befestigt ist, ist das System funktionsfähig. Es können Daten aus dem Datenträger mit Hilfe des Elektronikmoduls z.B. gelesen werden.

Aus der EP 0 648 653 ist eine Anordnung und ein Verfahren zur manipulationsgeschützten Identifikation von Fahrzeugen bekannt. Dabei wird mittels eines Bordcomputers ein Vergleich zwischen Daten, die in dem Bordcomputer gespeichert sind, Daten eines elektronischen Kennzeichens und Daten auf einem separaten Datenträger vorgenommen.

Das Problem der fehlerfreien und schnellen Zuordnung des Inhalts von offiziellen Begleitdokumenten eines Fahrzeuges, welche in aller Regel von einer Behörde ausgegeben werden und der auf einem dafür vorgesehenen Kennzeichen aufzubringenden Kennzeichnung, tritt bereits bei der Kennzeichenherstellung auf. Auch hier ist es bislang üblich, daß die von einer Behörde zur Aufschrift auf ein Kennzeichen vorgesehene Kennzeichnung von einer Person erfaßt und manuell z.B. in eine Prägemaschine eingegeben werden bzw. die Person zur Auswahl und Zusammenstellung von entsprechenden Prägezeichen veranlaßt. Dieser Vorgang ist aufwendig und fehleranfällig.

Eine fehlerfreie und schnelle Zuordnung der Aufschrift auf einem Fahrzeugkennzeichen z.B. zum Inhalt von offiziellen Begleitdokumenten des jeweiligen Fahrzeuges bzw. zu anderen, dazugehörigen Datensätzen, z.B. des jeweiligen Fahrzeugbesitzers, kann auch bei unterschiedlichsten anderen Anwendungen vorteilhaft sein. Ein derartige Zuordnung kann z.B. bei einer Erfassung der Benutzung von gebührenpflichtigen Straßen, von gebührenpflichtigen Parkhäusern, bei einer Zugangskontrolleinrichtung bei Garagen, an Schranken und vielem mehr auftreten.

Eine Aufgabe der Erfindung liegt darin, ein Fahrzeugkennzeichen anzugeben, bei dem eine Zuordnung der auf einem Fahrzeugkennzeichen befindlichen bzw. dafür vorgesehenen Kennzeichnungen zu dem Inhalt von dazugehörigen Begleitdatensätzen einfacher als bisher möglich ist.

Die Aufgabe wird gelöst mit den in Anspruch 1 und 12 angegebenen Fahrzeugkennzeichen. Weitere, vorteilhafte Ausführungsformen der Erfindung sind in Unteransprüchen enthalten. Verfahren zur Herstellung eines erfindungsgemäßen Fahrzeugkennzeichens sind in den Ansprüchen 19 und 22 angegeben, wobei weitere vorteilhafte Verfahrensmerkmale in Unteransprüchen enthalten sind.

Die Erfindung wird desweiteren anhand der in den nachfolgend kurz angeführten Figuren dargestellten Ausführungsbeispiele weiter erläutert. Dabei zeigt
- FIG 1: eine Draufsicht auf ein Fahrzeugkennzeichen gemäß der Erfindung,
- FIG 2: eine Schnittdarstellung durch das Fahrzeugkennzeichen von Figur 1,
- FIG 3: einen ausschnittsweise Schnittdarstellung durch eine weitere Ausführungsform der Erfindung,
- FIG 4: eine Draufsicht auf ein erste Ausführungsform eines elektronischen Datenträgers für Fahrzeugkennzeichen gemäß der Erfindung,
- FIG 5: eine Schnittdarstellung durch den beispielhaften elektronischen Datenträger von Figur 4,
- FIG 6: eine Schnittdarstellung durch einen Bereich eines Fahrzeugkennzeichens mit einem elektronischen Datenträger gemäß der Ausführung von Figur 4 und 5,
- FIG 7: eine Draufsicht auf ein Fahrzeugkennzeichen gemäß der Erfindung mit einer zweiten Ausführungsform eines elektronischen Datenträgers,
- FIG 8: eine Schnittdarstellung durch das Fahrzeugkennzeichen von Figur 7, und
- FIG 9: eine ausschnittsweise Schnittdarstellung durch ein Fahrzeugkennzeichen gemäß einer weiteren Ausführungsform der Erfindung.

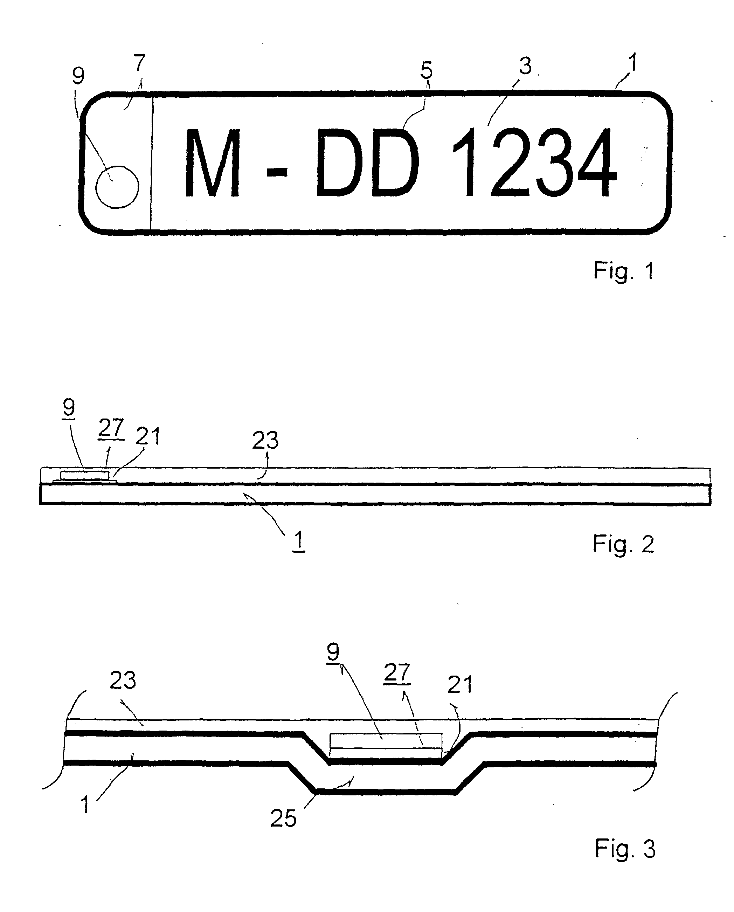

Figur 1 zeigt eine Draufsicht auf ein beispielhaftes, gemäß der Erfindung gestaltetes Fahrzeugkennzeichen. Dabei dient ein flächigen Kennzeichenträger 1 quasi als ein Grundkörper, welcher in der Regel die Form eines Schildes aufweist. Der Kennzeichenträger 1 kann aus unterschiedlichsten Materialien gefertigt sein, insbesondere aus einem Metall wie z.B. Aluminium. Es sind aber auch Kunststoffmaterialien einsetzbar.

Der Kennzeichenträger 1 weist zumindest ein Beschriftungsfeld 3 auf, welches zur Aufbringung einer Fahrzeugkennzeichnung 5 dient, im Beispiel der Figur 1 der musterhaften Kennzeichnung M - DD 1234. Diese kann insbesondere durch eine Prägung des Kennzeichenträgers 1, aber auch durch eine Aufklebung von entsprechenden Buchstaben- und Zahlenkombinationen aufgebracht werden. Desweiteren weist das erfindungsgemäße Fahrzeugkennzeichen einen zumindest berührungslos lesbaren elektronischen Datenträger 9 auf, welcher auf dem flächigen Kennzeichenträger 1 angebracht ist.

Durch Annäherung eines in den Figuren nicht näher dargestellten Lesegerätes können in berührungsloser Weise insbesondere mittels einer induktiven Datenübertragungsstrecke im Datenträger enthaltene Daten ausgelesen werden. Diese Daten werden in aller Regel im Zusammenhang stehen mit der auf dem Kennzeichen aufgebrachten Kennzeichnung und können nun in maschinenlesbarer Form auf beliebige Weise in externen Datenverarbeitungseinheiten weiterverarbeitet werden. Die Erfindung bietet den Vorteil, daß diese Daten ohne Zwischenschaltung einer Person fehlerfrei und in codierter, maschinenlesbarer Form erfaßt und z.B. der auf dem Kennzeichen befindlichen Beschriftung oder auch andersartigen Datensätzen zugeordnet werden können. Es ist auch ohne weiteres möglich, einen berührungslos beschreib- und lesbaren Datenträger auf dem Kennzeichenträger 1 anzubringen, auf den dann mit entsprechenden externen Schreib- und Lesegeräten in berührungsloser Weise Daten einschreibend bzw. diese wieder auslesend zugegriffen werden kann.

Wie bereits im Beispiel der Figur 1 dargestellt ist, kann der flächige Kennzeichenträger 1 des Fahrzeugkennzeichens neben dem eigentlichen Beschriftungsfeld 3 vorteilhaft eine zusätzliche Freifläche 7 aufweisen. Diese ist nicht zur Aufbringung einer Beschriftung vorgesehen. Es ist insbesondere dann vorteilhaft, den elektronischen Datenträger 9 auf der Freifläche 7 anzubringen, wenn die jeweilige Kennzeichnung durch eine Prägung des Kennzeichenträgers 1 aufgebracht wird.

Bei einer weiteren, in der ausschnittsweisen Schnittdarstellung von Figur 3 gezeigten Ausführungsform der Erfindung kann der flächige Kennzeichenträger 1 eine zusätzliche Aufnahmemulde 25 aufweist, wobei dann der elektronische Datenträger 9 vorteilhaft in der Aufnahmemulde 25 liegend angebracht ist.

Bei einer weiteren Ausführung der Erfindung ist es insbesondere dann, wenn der flächige Kennzeichenträger 1 aus einem elektrisch leitenden Material, insbesondere einem Metall, besteht vorteilhaft, wenn ein zusätzliches flächiges Abschirmelement zur elektromagnetischen Entkopplung zumindest zwischen der Unterseite des elektronischen Datenträgers und der Oberseite des Kennzeichenträgers angebracht ist.

Bei den in den Figuren 2 und 3 gezeigten Schnittdarstellungen durch ein Fahrzeugkennzeichen gemäß der Erfindung ist bereits ein derartiges flächiges Abschirmelement 21 zwischen dem elektronischen Datenträger 9 und dem Kennzeichenträger 1 eingelegt. Durch ein derartiges Abschirmelement kann der Aufbau einer insbesondere induktiven Datenübertragungsstrecke zu einem nicht dargestellten, externen Schreib- und Lesegerät erleichtert und insbesondere deren Reichweite erheblich vergrößert werden. Das Abschirmelement bewirkt eine elektromagnetische Entkopplung der in aller Regel vorhandenen Antennen eines Datenträgers von dem als metallische Unterlage dienenden Kennzeichenträger.

Das flächige Abschirmelement 21 kann vorteilhaft ein Kunststoffträger sein, der gegebenenfalls zusätzlich ferritisches Material enthält. Besonders vorteilhaft ist es, wenn das flächige Abschirmelement 21 in Form einer flexiblen Folie aus einem Verbund zumindest von Kunststoff und ferritischem Material ausgeführt ist. Bei dem in den Figuren 2 und 3 dargestellten Beispielen ist der Datenträger 9 mit allen seinen Elementen in einem zusätzlichen Gehäuse 27 untergebracht. Das Abschirmelement kann in einem solchen Fall auf der Unterseite des Gehäuses 27 angebracht sein. Bei einer anderen Ausführung kann das Abschirmelement sogar die Gehäuseunterseite selbst darstellen, bzw. in das Gehäuse integriert sein.

Gemäß einer weiteren, in den Beispielen der Figuren 2 und 3 ebenfalls bereits dargestellten Ausführungsform kann das Fahrzeugkennzeichen eine zusätzliche Schutzabdeckung 23 aufweisen, welche den flächigen Kennzeichenträger 1 und komplett mit dem darauf befindlichen elektronischen Datenträger 9 überzieht. Die Schutzabdeckung kann als eine Lichtreflexfolie oder als eine Selbstklebefolie bzw. als Kombination aus beidem ausgeführt sein. Besonders dann, wenn die Schutzabdeckung selbstklebend ist, wird die Herstellung eines Fahrzeugkennzeichens gemäß der Erfindung erheblich erleichtert. Dabei kann in einem ersten Herstellungsschritt zunächst ein elektronischer Datenträger mit der Unterseite der Schutzabdeckung in eine Haftverbindung gebracht werden. Erst in einem zweiten Schritt wird dann die Schutzabdeckung mit zwischenliegendem elektronischen Datenträger auf einem flächigen Kennzeichenträger angebracht. Diese Ausführung ist besonders geeignet für gehäuselose Datenträger, welche jedoch nicht Gegenstand der vorliegenden Erfindung sind. Bei diesen sind deren wesentlichen Elemente, insbesondere eine elektronische Verarbeitungseinheit zumindest zum Empfang und zur Speicherung von Daten und eine daran angeschlossene Antenne lose, d.h. nicht in einer festen räumlichen Zuordnung zueinander. Derartige nicht erfindungsgemäße gehäuselose Datenträger können auf einem separaten Trägermaterial angeordnet sein, und werden im oben aufgeführten ersten Schritt bei der Herstellung der Haftverbindung zur selbstklebenden Schutzabdeckung 23 vom Trägermaterial abgehoben. Es ist vorteilhaft, wenn erst nach Applikation von Datenträger in gehäuseloser bzw. gehäusebehafteter Form in einem weiteren Verarbeitungsschritt eine Kennzeichnung 5 auf das Beschriftungsfeld 3 z.B. durch Prägung angebracht wird.

Bei dem in den Figuren 2 und 3 dargestellten Beispielen ist der Datenträger 9 mit allen seinen Elementen in einem zusätzlichen Gehäuse 27 untergebracht. Er enthält in der Regel zumindest eine elektronische Verarbeitungseinheit und eine Antenne. Die Antenne ermöglicht zumindest einen Empfang von Daten, welche in der elektronischen Verarbeitungseinheit zumindest gespeichert werden.

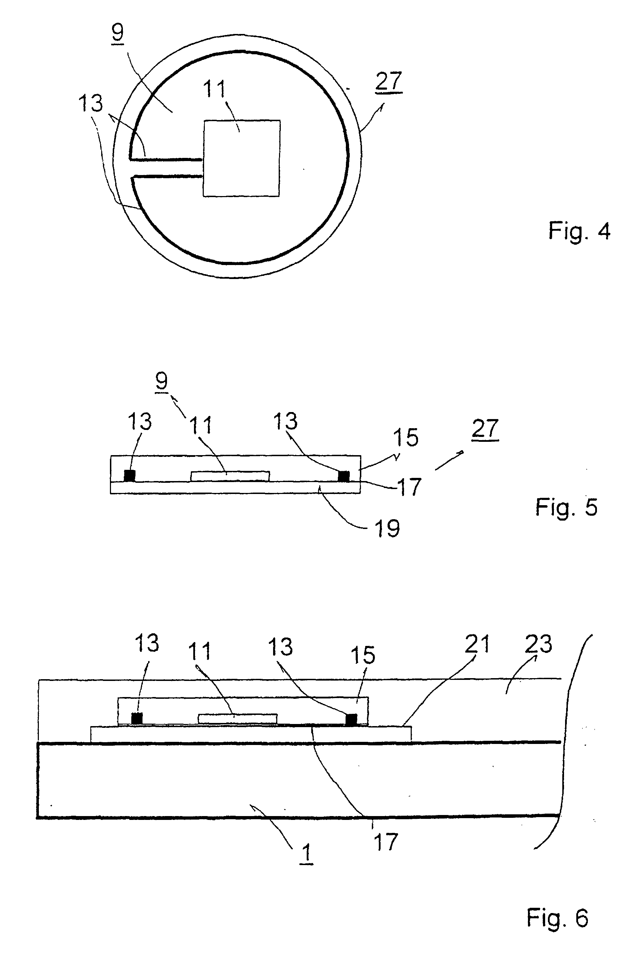

Figur 4 zeigt eine Draufsicht auf und Figur 5 einen Schnitt durch ein erste Ausführungsform eines für Fahrzeugkennzeichen gemäß der Erfindung einsetzbaren elektronischen Datenträgers. Dieser enthält als Hauptkomponenten zumindest eine elektronische Verarbeitungseinheit 11 und eine daran angeschlossene, annähernd ringförmig umlaufende, leitungsförmige Antenne 13. Diese Komponenten können bei einer gehäuselosen Ausführung eines Datenträgers z.B. in einer abziehbaren Form auf einem papierartigen Trägermaterial aufgelegt sein.

Bei den in den Beispielen der Figuren 4, 5 und 6 dargestellten Ausführungen für einen elektronischen Datenträger für Fahrzeugkennzeichen sind zumindest die elektronische Verarbeitungseinheit 11 und die daran angeschlossene Antenne 13 in einem Gehäuse 27 untergebracht. Gemäß der Schnittdarstellung von Figur 5 durch den beispielhaften elektronischen Datenträger von Figur 4 weist das Gehäuse vorteilhaft eine Klebeunterseite 17 auf, worüber eine Applikation des Datenträgers 9 auf dem flächigen Kennzeichenträger 1 bzw. einem flächigen Abschirmelement 21 möglich ist. Diese ist vor einer Applikation des elektronischen Datenträgers vorteilhaft mit einer Schutzabdeckung 19 insbesondere aus einer Art Wachspapier überzogen. Die Schutzabdeckung 19 ist für die Applikation des Datenträgers 9 auf dem flächigen Kennzeichenträger 1 abziehbar.

Vorteilhaft ist das Gehäuse 27 des elektronischen Datenträgers in Form einer Selbstklebefolie ausgebildet. In diesem Fall weist das Gehäuse 27 vorteilhaft die Form einer Plakette mit annähernd der Größe einer Münze auf. Eine derartige Ausführung ist in den Beispielen der Figur 1, 4, 5 und 6 bereits dargestellt. Ein derartig gestalteter Datenträger ist besonders einfach montierbar, indem er vergleichbar mit einem Aufkleber insbesondere vor einem Überzug des Kennzeichenträgers 1 mit einer bevorzugt als Reflexfolie ausgebildeten Schutzabdeckung 23 auf die Oberfläche des Kennzeichenträgers geklebt wird.

Figur 6 zeigt eine Schnittdarstellung durch denjenigen Bereich eines Fahrzeugkennzeichens, welcher mit einem elektronischen Datenträger gemäß der Ausführung von Figur 4 und 5 belegt ist. Dabei werden Antenne 13 und Verarbeitungseinheit 11 des Datenträgers 9 von einem vorteilhaft als Klebefolie ausgebildeten Gehäuse 15 getragen. Über deren Klebeunterseite 17 ist die münzenförmige Anordnung der Elemente 11, 13, 15 über ein zwischenliegendes flächiges Abschirmelement 21 auf der Oberseite des Kennzeichenträgers 1 aufgebracht. Abschließend sind alle Elemente von einer bevorzugt in Form einer undurchsichtigen Reflexfolie ausgeführten Schutzabdeckung 23 überzogen. Der in Figur 6 dargestellte Ausschnitt befindet sich bevorzugt im Bereich der Freifläche des Kennzeichenträgers.

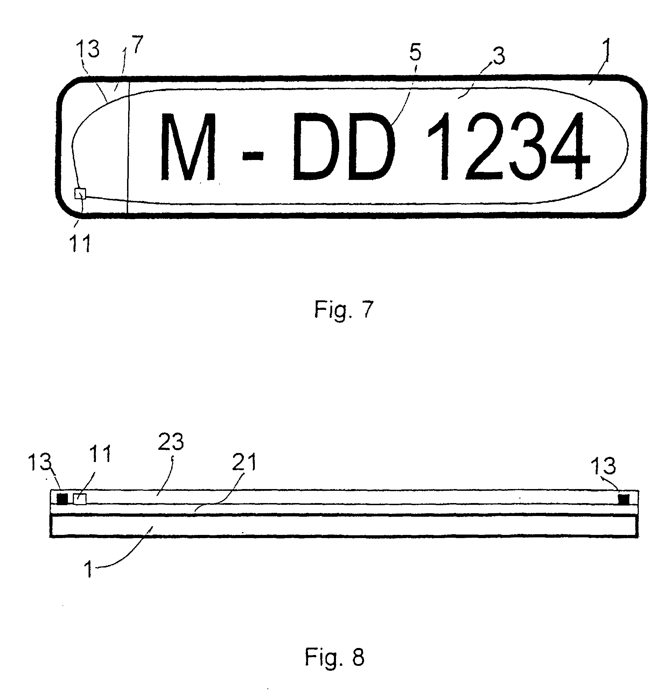

Schließlich zeigt Figur 7 eine Draufsicht auf ein weiteres Beispiel für ein Fahrzeugkennzeichen gemäß der Erfindung mit einer zweiten Ausführungsform eines elektronischen Datenträgers. Figur 8 zeigt die dazugehörige Schnittdarstellung. Dabei ist die Antenne 13 des elektronischen Datenträgers vorteilhaft in Größe und Form an den flächigen Kennzeichenträger 1 angepaßt. Vorteilhaft ist wiederum die Verarbeitungseinheit 11 in der kennzeichenfreien Freifläche 7 angeordnet, während die Leitung der daran angeschlossenen Antenne 13 im dargestellten Beispiel das Beschriftungsfeld 3 und die darauf befindliche Musterbeschriftung M - DD 1234 ringförmig umschließt. Mit einer derartigen Anordnung ist es möglich, die Reichweite einer insbesondere induktiven Datenübercragungsstrecke zwischen Antenne 13 und einem nicht dargestellten externen Schreib- und Lesegerät weiter zu vergrößern. Vorteilhaft überzieht das flächige Abschirmelement 21 bei einer derartigen Ausführung annähernd den gesamten flächigen Kennzeichenträger 1. Derartig großflächige elektronische Datenträger, d.h. zumindest deren elektronische Verarbeitungseinheit 11 und eine daran angeschlossene Antenne 13, sind vorteilhaft abnehmbar auf einem Träger 17 angebracht. Hierdurch kann eine Applikation des Datenträgers z.B. entweder auf der Oberfläche des Kennzeichenträgers oder z.B. auf der Innenseite einer selbstklebenden Schutzabdeckung 23 vereinfacht werden.

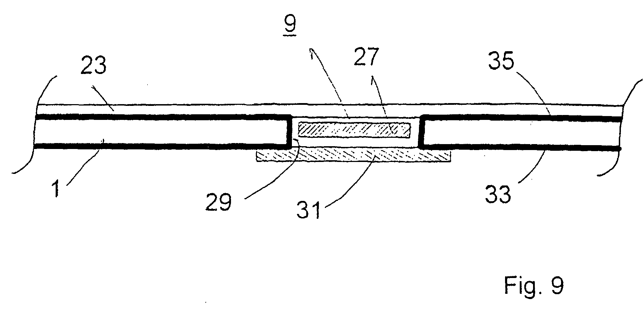

Figur 9 zeigt eine weitere Möglichkeit der Anbringung eines elektronischen Datenträgers an einem Fahrzeugkennzeichen. Dabei weist der Kennzeichenträger 1 eine insbesondere durch Bohrung oder Stanzung herstellbare Aufnahmeöffnung bzw. Blechaussparung 29 auf, welche zur Aufnahme eines Datenträgers dient. Vorteilhaft sind einerseits die Abmessungen der Aussparung an die Größe des Datenträgers angepaßt. Ferner ist vorteilhaft die Dicke des Datenträgers an die Tiefe der Aussparung, d.h. an die Materialstärke des Kennzeichenträgers angepaßt. Der Datenträger kann in die Aufnahmeöffnung eingelegt, eingeklemmt, eingeklebt oder andersartig darin befestigt werden.

Diese Anordnung hat zum einen den Vorteil, daß der Kennzeichenträger bereits während der Herstellung als Rohling mit einer Aufnahmeöffnung 29 versehen werden kann. Mögliche weitere Fertigungsschritte können unabhängig davon erfolgen, ob ein Datenträger 9 bereits in die Aufnahmeöffnung 29 eingelegt ist oder nicht. Insbesondere kann das Aufbringen einer Schutzabdeckung 23, bevorzugt in Form einer undurchsichtigen, selbstklebenden Reflexfolie, und das Aufbringen einer Kennzeichnung auf dem Beschriftungsfeld vorher erfolgen, und ein Datenträger erst nach Abschluß aller weitgehend mechanischen Bearbeitungen des Fahrzeugkennzeichens in der Aussparung angebracht werden. Vorteilhaft bleibt dabei die Vorderseite 35 des Fahrzeugkennzeichens vollkommen plan. Ist diese mit einer Schutzabdeckung überzogen, so treten im Bereich der Aufnahmeöffnung keine Aufwölbungen auf. Vorteilhaft kann die Aufnahmeöffnung nach Einlegung eines Datenträgers 9 durch eine auf der Rückseite 33 des Kennzeichenträgers aufgebrachte Abdekkung 31 versiegelt und mechanischen Einflüssen geschützt werden.

Ein Vorteil der in Figur 9 beispielhaft dargestellten Ausführung der Erfindung liegt darin, daß der Datenträger nur seitlich vom Material des Kennzeichenträgers umgeben ist. Die Unterlage eines flächigen Abschirmelementes unter den Datenträger ist selbst dann nicht erforderlich, wenn der Kennzeichenträger aus Metall gefertigt ist. Bereits durch eine entsprechende Größe der Abmessungen der Aufnahmeöffnung im Vergleich zu den Abmessungen des Datenträgers kann eine ausreichende seitliche Entkopplung von umgebenden Metallteilen erreicht werden.

Bei der Herstellung von derartigen Fahrzeugkennzeichen wird somit der Kennzeichenträger vorteilhaft zunächst mit der Aufnahmeöffnung versehen. Danach kann eine zusätzliche Schutzabdeckung mit der Vorderseite 35 des Kennzeichenträger in eine Haftverbindung gebracht werden, so daß die Aufnahmeöffnung vollständig abgedeckt wird. Es können sich weitere Bearbeitungsschritte anschließen, insbesondere die Anbringung einer Kennzeichnung auf dem Beschriftungsfeld. Schließlich kann ein elektronischer Datenträger von der nicht mit der Schutzabdekkung versehenen Rückseite 33 des flächigen Kennzeichenträgers in die Aufnahmeöffnung eingelegt werden. Schließlich kann in einem weiteren Schritt die Aufnahmeöffnung 29 auf der Rückseite 33 des Kennzeichenträgers mit einer Abdeckung 31 verschlossen wird.

Der besondere Vorteil dieser Ausführung der Erfindung besteht in der Möglichkeit der nachträglichen Einbringung des Datenträgers. Das Fahrzeugkennzeichen kann wie bisher, ohne Rücksicht auf den Datenträger gefertigt werden. Der Datenträger kann nachträglich, z.B. in einer behördlichen Zulassungsstelle für Kraftfahrzeuge, angebracht werden, und die Aufnahmeöffnung kann von der rückwärtigen Seite fälschungssicher versiegelt werden. Wird die Versiegelung unter Verwendung von nichtmetallischen Materialien ausgeführt, so kann der Datenträger von beiden Seiten des Fahrzeugkennzeichens berührungslos auf induktivem Wege gelesen bzw. neu mit Daten beschreiben werden.

## Patentansprüche

1. Fahrzeugkennzeichen, mit
A. einem flächigen Kennzeichenträger (1), welcher zumindest ein Beschriftungsfeld (3) zur Aufbringung einer Kennzeichnung (5) aufweist, und
B. einem berührungslos lesbaren elektronischen Datenträger (9) mit zumindest einer elektronischen Verarbeitungseinheit (11) und einer daran angeschlossenen Antenne (13),
**dadurch gekennzeichnet, dass** zumindest die elektronische Verarbeitungseinheit (11) und die Antenne (13) in einem gemeinsamen Gehäuse (15,27) zur Anbringung am flächigen Kennzeichenträger (1) untergebracht sind.

2. Fahrzeugkennzeichen nach Anspruch 1, wobei
A. der flächige Kennzeichenträger (1) eine zusätzliche Freifläche (7) aufweist, und
B. der elektronische Datenträger (9) auf der Freifläche (7) angebracht ist.

3. Fahrzeugkennzeichen nach Anspruch 1 oder 2, wobei
A. der flächige Kennzeichenträger (1) eine zusätzliche Aufnahmemulde (25) aufweist, und
B. der elektronische Datenträger (9) in der Aufnahmemulde (25) angebracht ist.

4. Fahrzeugkennzeichen nach einem der Ansprüche 1 bis 3, mit
A. einem flächigen Kennzeichenträger (1) aus einem elektrisch leitenden Material, insbesondere einem Metall, und
B. einem flächigen Abschirmelement (21) zur elektromagnetischen Entkopplung, welches zumindest zwischen elektronischem Datenträger (9) und Kennzeichenträger (1) angebracht ist.

5. Fahrzeugkennzeichen nach einem der vorangegangenen Ansprüche, mit einer Schutzabdeckung (23) für den flächigen Kennzeichenträger (1) und den elektronischen Datenträger (9).

6. Fahrzeugkennzeichen nach Anspruch 5, mit einer Lichtreflexfolie als Schutzabdeckung für den flächigen Kennzeichenträger (1) und den elektronischen Datenträger (9).

7. Fahrzeugkennzeichen nach Anspruch 5 oder 6, mit einer Selbstklebefolie als Schutzabdeckung (23) für den flächigen Kennzeichenträger (1) und den elektronischen Datenträger (9).

8. Fahrzeugkennzeichen nach einem der vorangegangenen Ansprüche, wobei das gemeinsame Gehäuse (15,27) des elektronischen Datenträgers (9) eine Klebeunterseite (17) für eine Applikation des Datenträgers (9) auf dem flächigen Kennzeichenträger (1) aufweist.

9. Fahrzeugkennzeichen nach Anspruch 8, wobei die Klebeunterseite (17) eine Klebeschutzabdeckung (19) aufweist, insbesondere Wachspapier, welche für die Applikation des Datenträgers (9) auf dem flächigen Kennzeichenträger (1) entfernbar ist.

10. Fahrzeugkennzeichen nach einem der vorangegangenen Ansprüche, mit einer Klebefolie als gemeinsames Gehäuse (15,27) des elektronischen Datenträgers (9).

11. Fahrzeugkennzeichen nach einem der vorangegangenen Ansprüche, wobei das gemeinsame Gehäuse (15,27) des elektronischen Datenträgers (9) die Form einer Plakette mit annähernd der Größe einer Münze aufweist.

12. Fahrzeugkennzeichen, mit
A. einem flächigen Kennzeichenträger (1), welcher zumindest ein Beschriftungsfeld (3) zur Aufbringung einer Kennzeichnung (5) aufweist, und
B. einem berührungslos lesbaren elektronischen Datenträger (9) mit zumindest einer elektronischen Verarbeitungseinheit (11) und einer daran angeschlossenen Antenne (13),
**dadurch gekennzeichnet, dass**
C. der flächige Kennzeichenträger (1) eine zusätzliche Aufnahmeöffnung (29) aufweist, und
D. zumindest die elektronische Verarbeitungseinheit (11) und die Antenne (13) in einem gemeinsamen Gehäuse (27) untergebracht sind, welches in der Aufnahmeöffnung angebracht ist, insbesondere in die Aufnahmeöffnung eingelegt ist.

13. Fahrzeugkennzeichen nach Anspruch 12, wobei
A. der flächige Kennzeichenträger (1) eine zusätzliche Freifläche (7) aufweist, und
B. der elektronische Datenträger (9) in der Freifläche (7) angebracht ist.

14. Fahrzeugkennzeichen nach einem der Ansprüche 12 oder 13, mit einer Schutzabdeckung (23) für den flächigen Kennzeichenträger (1) und den elektronischen Datenträger (9).

15. Fahrzeugkennzeichen nach einem der Ansprüche 12 bis 14, mit einer Lichtreflexfolie als Schutzabdeckung (23) für den flächigen Kennzeichenträger (1) und den elektronischen Datenträger (9).

16. Fahrzeugkennzeichen nach einem der Ansprüche 12 bis 15, mit einer Selbstklebefolie als Schutzabdeckung (23) für den flächigen Kennzeichenträger (1) und den elektronischen Datenträger (9).

17. Fahrzeugkennzeichen nach einem der Ansprüche 12 bis 16, mit Mitteln (31) zur Abdeckung der Aufnahmeöffnung (29) auf der Rückseite (33) des Kennzeichenträgers (1).

18. Fahrzeugkennzeichen nach einem der vorangegangenen Ansprüche 12 bis 17, mit einer Klebefolie als gemeinsames Gehäuse (15,27) des elektronischen Datenträgers (9).

19. Verfahren zur Herstellung von Fahrzeugkennzeichen nach einem der Ansprüche 5, 6 oder 7, **gekennzeichnet durch** mindestens die Schritte, dass
A. ein elektronischer Datenträger (9) mit einer Schutzabdeckung (23) in eine Haftverbindung gebracht wird, und
B. die Schutzabdeckung (23) mit zwischenliegendem elektronischen Datenträger (9) auf einem flächigen Kennzeichenträger (1) angebracht wird.

20. Verfahren nach Anspruch 19, wobei in einem weiteren Schritt eine Kennzeichnung (5) auf das Beschriftungsfeld (3) angebracht wird.

21. Verfahren nach Anspruch 19 oder 20, wobei ein elektronischer Datenträger (9) vor Herstellung der Haftverbindung mit der Schutzabdeckung (23) gehäuselos von einem Trägermaterial (17) abgehoben wird.

22. Verfahren zur Herstellung von Fahrzeugkennzeichen nach einem der vorangegangenen Ansprüche 12 bis 18, **gekennzeichnet durch** mindestens die Schritte, dass
A. der Kennzeichenträger (1) mit einer Aufnahmeöffnunc (29) versehen wird,
B. eine Schutzabdeckung (23) auf einer Vorderseite (35) des Kennzeichenträgers (1) unter Abdeckung der Aufnahmeöffnung (29) in eine Haftverbindung gebracht wird,
C. eine Kennzeichnung (5) auf das Beschriftungsfeld (3) angebracht wird, und
D. ein elektronischer Datenträger (9) von der nicht mit der Schutzabdeckung (23) versehenen Rückseite (33) des flächigen Kennzeichenträgers (1) in die Aufnahmeöffnung (29) eingelegt wird.

23. Verfahren nach Anspruch 22, wobei in einem weiteren Schritt die Aufnahmeöffnung (29) auf der Rückseite (33) des Kennzeichenträgers (1) mit einer Abdeckung (31) verschlossen wird.

## Claims

1. Vehicle identifier, with
A. a flat identification carrier (1) having at least one labelling field (3) for the application of an identification (5), and
B. a contact-free, readable, electronic data carrier (9) with at least one electronic processing unit (11) and an antenna (13) connected thereto,
**characterised in that** at least the electronic processing unit (11) and the antenna (13) are housed in a common housing (15, 27) for mounting on the flat identification carrier (1).

2. Vehicle identifier according to Claim 1,
A. the flat identification carrier (1) having an additional free area (7), and
B. the electronic data carrier (9) being mounted on the free area (7).

3. Vehicle identifier according to Claim 1 or 2,
A. the flat identification carrier (1) having an additional receiving recess (25), and
B. the electronic data carrier (9) being mounted in the receiving recess (25).

4. Vehicle identifier according to one of Claims 1 to 3, with
A. a flat identification carrier (1) made of an electrically conducting material, in particular a metal, and
B. a flat shielding element (21) for electromagnetic decoupling, which is at least mounted between the electronic data carrier (9) and the identification carrier (1).

5. Vehicle identifier according to one of the preceding claims, with a protective covering (23) for the flat identification carrier (1) and the electronic data carrier.

6. Vehicle identifier according to Claim 5, with a light-reflecting foil as a protective covering for the flat identification carrier (1) and the electronic data carrier (9).

7. Vehicle identifier according to Claim 5 or 6, with a self-adhering foil as protection covering (23) for the flat identification carrier (1) and the electronic data carrier (9).

8. Vehicle identifier according to one of the previous claims, the common housing (15, 27) of the electronic data carrier (9) having an adhesive underside (17) for an application of the data carrier (9) on the flat identification carrier (1).

9. Vehicle identifier according to Claim 8, the adhesive underside (17) having an adhesive protection covering (19), in particular waxed paper, which can be removed for the application of the data carrier (9) on the flat identification carrier (1).

10. Vehicle identifier according to one of the previous claims, with an adhesive foil as a common housing (15, 27) of the electronic data carrier (9).

11. Vehicle identifier according to one of the previous claims, the common housing (15, 27) of the electronic data carrier (9) having the form of a plaque with approximately the size of a coin.

12. Vehicle identifier, with
A. a flat identification carrier (1) having at least one labelling field (3) for the application of an identification (5), and
B. a contact-free, readable, electronic data carrier (9) with at least one electronic processing unit (11) and one antenna (13) connected thereto
**characterised in that**
C. the flat identification carrier (1) has an additional receiving opening (29), and
D. at least the electronic processing unit (11) and the antenna (13) are housed in a common housing (27), mounted in the receiving opening, in particular laid into the receiving opening.

13. Vehicle identifier according to Claim 12,
A. the flat identification carrier (1) having an additional free area (7), and
B. the electronic data carrier (9) being mounted in the free area (7).

14. Vehicle identifier according to one of Claims 12 or 13, with a protective covering (23) for the flat identification carrier (1) and the electronic data carrier (9).

15. Vehicle identifier according to one of Claims 12 to 14, with a light-reflecting foil as a protective covering (23) for the flat identification carrier (1) and the electronic data carrier (9).

16. Vehicle identifier according to one of Claims 12 to 15, with a self-adhering foil as protection covering (23) for the flat identification carrier (1) and the electronic data carrier (9).

17. Vehicle identifier according to one of Claims 12 to 16, with means (31) for covering the receiving opening (29) on the back (33) of the identification carrier (1).

18. Vehicle identifier according to one of the preceding Claims 12 to 17, with an adhesive foil as a common housing (15, 27) of the electronic data carrier (9).

19. Method for manufacturing vehicle identifiers according to one of Claims, 5, 6 or 7, **characterised by** at least the steps that
A. an electronic data carrier (9) is brought into an adhering connection with a protective covering (23), and
B. the protective covering (23) with a sandwiched electronic data carrier (9) is mounted on a flat identification carrier (1).

20. Method according to Claim 19, an identification (5) being mounted in a further step onto the labelling field (3).

21. Method according to Claim 19 or 20, an electronic data carrier (9) being removed, before manufacture of the adhering connection with the protective covering (23), which has no housing, from a carrier material (17).

22. Method for manufacturing vehicle identifiers according to one of the preceding Claims 12 to 18, **characterised by** at least the steps that
A. the identification carrier (1) is provided with a receiving opening (29),
B. a protective covering (23) is brought into an adhering connection on a front side (35) of the identification carrier (1) such that the receiving opening (29) is covered,
C. an identification (5) is applied to the labelling field (3), and
D. an electronic data carrier (9) is laid into the receiving opening (29) from the flat identification carrier's (1) back side (33) which is not provided with the protective covering (23).

23. Method according to Claim 22, the receiving opening (29) on the back (33) of the identification carrier (1) being sealed with a covering (31) in a further step.

## Revendications

1. Plaque minéralogique comprenant
A. un support de numéro (1) plat qui présente au moins une case d'inscription (3) pour apposer un numéro minéralogique (5) et
B. un support de données (9) électronique qu'on peut lire sans contact, avec au moins une unité de traitement (11) électronique et avec une antenne (13) qui y est raccordée,
**caractérisée en ce qu'**au moins l'unité de traitement (11) électronique et l'antenne (13) sont logées dans un boîtier (15, 27) commun destiné à être appliqué sur le support de numéro (1) plat.

2. Plaque minéralogique selon la revendication 1 pour laquelle
A. le support de numéro (1) plat présente une surface libre (7) supplémentaire et
B. le support de données (9) électronique est appliqué sur la surface libre (7).

3. Plaque minéralogique selon la revendication 1 ou 2 pour laquelle
A. le support de numéro (1) plat présente une cavité de réception (25) supplémentaire et
B. le support de données (9) électronique est appliqué dans la cavité de réception (25).

4. Plaque minéralogique selon l'une des revendications 1 à 3 avec
A. un support de numéro (1) plat en un matériau conducteur d'électricité, en particulier en métal et
B. un élément de blindage (21) plat pour la neutralisation électromagnétique, lequel est appliqué au moins entre le support de données (9) électronique et le support de numéro (1).

5. Plaque minéralogique selon l'une des revendications précédentes avec un revêtement de protection (23) pour le support de numéro (1) plat et pour le support de données (9) électronique.

6. Plaque minéralogique selon la revendication 5 avec une feuille réfléchissant la lumière en tant que revêtement de protection pour le support de numéro (1) plat et pour le support de données (9) électronique.

7. Plaque minéralogique selon la revendication 5 ou 6 avec une feuille autocollante en tant que revêtement de protection (23) pour le support de numéro (1) plat et pour le support de données (9) électronique.

8. Plaque minéralogique selon l'une des revendications précédentes pour laquelle le boîtier (15, 27) commun du support de données (9) électronique présente une face inférieure collante (17) pour une application du support de données (9) sur le support de numéro (1) plat.

9. Plaque minéralogique selon la revendication 8 pour laquelle la face inférieure collante (17) présente un revêtement de protection collant (19), en particulier un papier paraffiné, qu'on peut retirer pour appliquer le support de données (9) sur le support de numéro (1) plat.

10. Plaque minéralogique selon l'une des revendications précédentes avec un ruban adhésif en tant que boîtier (15, 27) commun du support de données (9) électronique.

11. Plaque minéralogique selon l'une des revendications précédentes pour laquelle le boîtier (15, 27) commun du support de données (9) électronique présente la forme d'une plaquette approximativement de la dimension d'une pièce de monnaie.

12. Plaque minéralogique avec
A. un support de numéro (1) plat qui présente au moins un case d'inscription (3) pour apposer un numéro minéralogique (5) et
B. un support de données (9) électronique qu'on peut lire sans contact, avec au moins une unité de traitement (11) électronique et avec une antenne (13) qui y est raccordée,
**caractérisée en ce que**
C. le support de numéro (1) plat présente une ouverture de réception (29) supplémentaire et
D. au moins l'unité de traitement (11) électronique et l'antenne (13) sont logées dans un boîtier (27) commun qui est appliqué dans l'ouverture de réception, en particulier inséré dans l'ouverture de réception.

13. Plaque minéralogique selon la revendication 12 pour laquelle
A. le support de numéro (1) plat présente une surface libre (7) supplémentaire et
B. le support de données (9) électronique est appliqué sur la surface libre (7).

14. Plaque minéralogique selon l'une des revendications 12 ou 13 comprenant un revêtement de protection (23) pour le support de numéro (1) plat et pour le support de données (9) électronique.

15. Plaque minéralogique selon l'une des revendications 12 à 14 comprenant une feuille réfléchissant la lumière en tant que revêtement de protection (23) pour le support de numéro (1) plat et pour le support de données (9) électronique.

16. Plaque minéralogique selon l'une des revendications 12 à 15 comprenant un ruban auto-adhésif en tant que revêtement de protection (23) pour le support de numéro (1) plat et pour le support de données (9) électronique.

17. Plaque minéralogique selon l'une des revendications 12 à 16 comprenant des moyens (31) pour recouvrir l'ouverture de réception (29) sur le côté arrière (33) du support de numéro (1).

18. Plaque minéralogique selon l'une des revendications précédentes 12 à 17 comprenant un ruban adhésif en tant que boîtier commun (15, 27) du support de données (9) électronique.

19. Procédé pour fabriquer des plaques minéralogiques selon l'une des revendications 5, 6 ou 7 **caractérisé par** au moins les étapes suivantes :
A. un support de données (9) électronique est mis en liaison adhésive avec un revêtement de protection (23) et
B. le revêtement de protection (23) avec le support de données (9) électronique intercalé est appliqué sur un support de numéro (1) plat.

20. Procédé selon la revendication 19 pour lequel un numéro minéralogique (5) est apposé sur la case d'inscription (3) dans une autre étape.

21. Procédé selon la revendication 19 ou 20 pour lequel un support de données (9) électronique est retiré sans le boîtier d'un matériau de support (17) avant la fabrication de la liaison adhésive avec le revêtement de protection (23).

22. Procédé pour fabriquer des plaques minéralogiques selon l'une des revendications 12 à 18 **caractérisé par** au moins les étapes suivantes:
A. le support de numéro (1) est muni d'une ouverture de réception (29),
B. un revêtement de protection (23) est mis en liaison adhésive sur un côté avant (35) du support de numéro (11) en recouvrant l'ouverture de réception (29),
C. un numéro minéralogique (5) est apposé sur la case d'inscription (3) et
D. un support de données (9) électronique est inséré dans l'ouverture de réception (29) à partir du côté arrière - qui n'est pas muni du revêtement de protection (23) - du support de numéro (1) plat.

23. Procédé selon la revendication 22 pour lequel l'ouverture de réception (29) est fermée avec un recouvrement (31) sur le côté arrière (33) du support de numéro (1) dans une autre étape.
